# EUROPEAN PATENT SPECIFICATION

(11) **EP 0 919 787 B1**
(45) Date of publication and mention of the grant of the patent: **10.04.2002**
(21) Application number: 98122430.6
(22) Date of filing: 26.11.1998
(51) Int. Cl.: G01C 21/20, G01S 5/14

(54) **Navigation data receiving device**
Vorrichtung für den Empfang von Navigationsdaten
Appareil de réception de données de navigation

(30) Priority: 28.11.1997 JP 34455297
(43) Date of publication of application: 02.06.1999
(73) Proprietor: Mitsumi Electric Co., Ltd., Chofu-shi, Tokyo (JP)
(72) Inventor: Ogino, Toshikazu, c/o Mitsumi Electric Co.,Ltd., Atsugi-shi, Kanagawa (JP); Komatsu, Motoi, c/o Mitsumi Electric Co.,Ltd., Atsugi-shi, Kanagawa (JP)
(74) Representative: Grünecker, Kinkeldey, Stockmair & Schwanhäusser Anwaltssozietät

(56) References cited:
- EP-A- 0 786 646
- WO-A-97/35166
- PATENT ABSTRACTS OF JAPAN vol. 097, no. 010, 31 October 1997 & JP 09 166450 A (SUMITOMO ELECTRIC IND LTD), 24 June 1997

## Description

This invention relates to a navigation data receiving device according to the preamble part of claim 1.

The navigation system that radio waves from the GPS (global positioning system) satellite is received to detect the present position, and the present position thus detected is displayed on the display map, has been popularly employed as a mobile system. Recently, attention has been paid to the advantage that this system is applied to the portable personal computer (PC).

In the case of the portable type, being different from the mobile type, for the purpose of miniaturization and weight reduction, the hard system is limited; that is, the hard disk capacity is not so large. In general, map data are down-loaded from the CD-ROM to the PC' hard disk. In the case of a hard disk small in capacity, all the parts of the map data read out of the CD-ROM are not down-loaded; that is, only a necessary part is selectively down-loaded.

In the case where a portable PC is carried, usually the CD-ROM and its driver are not carried. If the user is moving on, soon it becomes impossible to cover the range of movement by the map data in the hard disk. This tendency is significant as the portable PC is miniaturized.

EP-A-0 786 646 discloses a system and method for distributing updated navigation data used in in-vehicle navigation systems. The vehicle owners of such navigation systems may visit a plurality of so-called "local repositories" from time to time where they can obtain updated navigation data. Both the repositories and the in-vehicle navigation systems have the possibility to be updated with actual navigation data. The update of the local repositories can be done either by administrator technicians who access them to update their geographical data sets or electronically via a communication link by modem with a central or regional facility.

The Patent abstract of Japan JP 09166450 A discloses a navigation equipment which contains a modem and a communication device. This navigation equipment contains a GPS which transmits the current position information of a vehicle via a communication line to server machines found in the intemet. The server machines hereupon transmit map data including the position of the vehicle to the navigation equipment.

WO-A-97 35 166 discloses a remote data collection system used in vehicles, which includes directional sensors such as one or more cameras for sensing a characteristic of interest and providing sensor data. This system further includes a global positioning system (GPS) receiver and a disk storage unit. A processing unit determines geographic data referenced to the sensor data in response to the GPS data. These geographic data are stored in the disk storage unit.

The premise of the present invention resides in the novel navigation system that data base is formed which can supply map data over wide areas, and part of the map data is received the user through internet and down-loaded to the portable PC's hard disk.

With this system, even if the hard disk capacity is small, when necessary, necessary map data is received and down-loaded in the hard disk. Therefore, navigation service can be obtained that is substantially equivalent to that of the PC which has a large capacity hard disk.

An object of the invention is to provide a navigation data receiving device in which internet is utilized to distribute map data, whereby, even with a portable personal computer small in hard disk capacity, navigation service can be obtained over wide range.

The foregoing object of the invention has been achieved by the provision of a navigation data receiving device for a portable personal computer comprising:
a modem block which is a device adapted to receive navigation data through internet which is down-loaded in a hard disk of the portable personal computer, and which receives the navigation data through the internet; and
a GPS block adapted to receive GPS data of a GPS system, wherein the modem block and the GPS block are mounted on a common PC card.

A PC card incorporating a GPS block has been put in practical use. In view of an available space, it is sufficiently possible to build a modem block adapted to receiving navigation data in the same PC card. Hence, with a portable PC, merely by using only one PC card, not only the GPS data but also the navigation data can be received. The navigation data include restaurant data and town data in addition to map data.

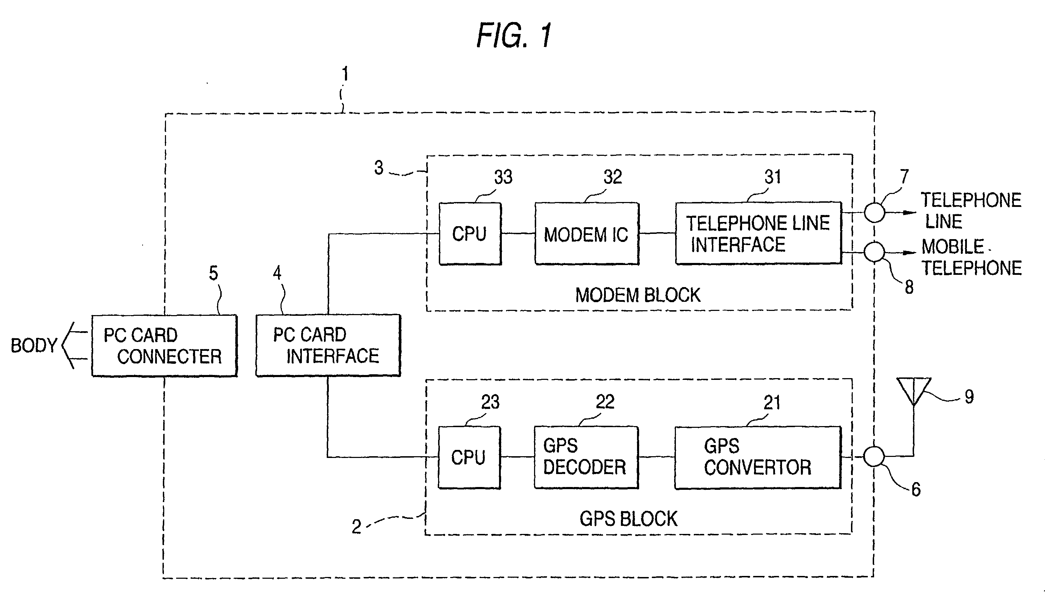

FIG. 1 is a block diagram showing a PC card, which is an embodiment of the invention.

This invention will be described with reference its preferred embodiment shown in the accompanying drawing. FIG. 1 is a block diagram of a PC card showing the embodiment of the invention. In FIG. 1, reference numeral 1 designates a PC card; 2, a GPS block; 3, a modem block; 4, a PC card inter face; 5, a PC card connector; 6, a GPS receiving antenna connecting terminal; 7, a telephone line connecting terminal; and 8, a portable telephone connecting terminal.

The GPS block 2 comprises: a GPS converter 21 adapted to convert a radio wave from the GPS satellite, which is received through a GPS receiving antenna 9 connected to the terminal, into a signal low in frequency band; a GPS decoder 22 adapted to decode the output of the converter 21 to output position data; and a CPU 23 adapted to process the position data outputted by the decoder 22.

The modem block 3 comprises: a telephone line interface 31 adapted to access internet with a portable telephone set connected to a telephone line connected to the terminal 7 or to the terminal 8; a modem IC 32 which utilizes internet connected through the telephone line interface, to receive navigation data from a navigation system data base; and a CPU 33 adapted to process navigation data demodulated by the modem IC 32.

The PC card interface 4 is to connect the CPU 23 of the GPS block 2 and the CPU 33 of the modem block 3 to a PC body (not shown). The PC card connector 5 is to connect the PC card interface 4 to the PC body.

The PC body is of a hard design necessary for a general portable PC; that is, it comprises: a hard disk which down-loads navigation data, a RAM which reads necessary data from the hard disk and stores them temporarily; a display which displays a map image according to the aforementioned navigation data, or the present position mark according to GPS data; and a keyboard adapted to externally give instructions.

In the invention, according to the capacity of the hard disk of the PC body, only a part of the navigation system data base provided by the internet is received, and down-loaded in the hard disk. Only a part of the data base can be selectively down-loaded by inputting a "zone name" of a necessary area with the keyboard. The modem block 3 has a function of transmitting signals to internet. Hence, the modem block 3 may be so designed that the present position data obtained from the GPS system is transmitted to the internet, to receive navigation data with the present position data as reference.

The PC card 1 may be a PCMCIA card. Alternatively, an RC232C port may be utilized therefor. And an infrared ray interface may be utilized.

As was described above, according to the invention, internet is utilized to distribute map data. Therefore, a navigation data receiving device can be proposed in which, even with a portable personal computer small in had disk capacity, navigation service can be received in a wide range. Of course, the present invention is not limited by this embodiment. This invention is applicable for automobile type navigation system or the like.

## Claims

1. A navigation data receiving device comprising:
a modem block (3), adapted to receive navigation data through the internet, and
a GPS block (2), adapted to receive GPS data of a GPS system,
**characterized in that,**
said modem block (3) and said GPS block (2) are mounted on a common PC card (1).

2. A navigation data receiving device (1) according to claim 1, wherein said navigation data includes map data, restaurant data and town data.

3. The navigation data receiving device (1) according to claim 1 or 2, wherein said navigation data is downloaded on a hard disk of a portable personal computer.

## Patentansprüche

1. Navigationsdaten empfangende Vorrichtung, die umfasst:
einen Modemblock (3), der geeignet ist, Navigationsdaten über das Internet zu empfangen, und
einen GPS-Block (2), der geeignet ist, GPS-Daten eines GPS-Systems zu empfangen,
**dadurch gekennzeichnet, dass**
der Modemblock (3) und der GPS-Block (2) auf einer gemeinsamen PC-Karte (1) montiert sind.

2. Navigationsdaten empfangende Vorrichtung nach Anspruch 1, wobei die Navigationsdaten Kartendaten, Restaurant-Daten und Stadt-Daten enthalten.

3. Navigationsdaten empfangende Vorrichtung nach Anspruch 1 oder 2, wobei die Navigationsdaten auf eine Festplatte eines tragbaren PC herunter geladen werden.

## Revendications

1. Dispositif de réception de données de navigation, comprenant :
un bloc modem (3), conçu pour recevoir des données de navigation via Internet, et
un bloc GPS (2), conçu pour recevoir des données GPS d'un système GPS,
**caractérisé en ce que** ledit bloc modem (3) et ledit bloc GPS (2) sont montés sur une carte PC commune (1).

2. Dispositif (1) de réception de données de navigation selon la revendication 1, où lesdites données de navigation comportent des données cartographiques, des données relatives à des restaurants et des données urbaines.

3. Dispositif (1) de réception de données de navigation selon la revendication 1 ou 2, où lesdites données de navigation sont téléchargées sur un disque dur d'un ordinateur personnel portatif.
